# EUROPÄISCHE PATENTANMELDUNG

(11) **EP 0 623 538 A1**
(43) Veröffentlichungstag der Anmeldung: **09.11.1994**
(21) Anmeldenummer: 94105642.6
(22) Anmeldetag: 13.04.1994
(51) Int. Cl.: B65G 65/06, B65G 19/26

(54) **Einrichtung zum Ein- und Ausstapeln von Schüttgut**

(30) Priorität: 07.05.1993 DE 4315226
(71) Anmelder: PWH Anlagen + Systeme GmbH, D-66386 St. Ingbert-Rohrbach (DE)
(72) Erfinder: Steckel, Horst, Dipl.-Ing., D-66386 St. Ingbert (DE)

(57) **Zusammenfassung**

Vorgeschlagen wird eine Einrichtung zum Ein- und/oder Ausstapeln von Schüttgut mit mindestens einem an einem Fahrgestell heb- und senkbar gelagerten Ausleger (12), der eine Vielzahl von durch mindestens ein reversierbares Zugorgan (15) antreibbaren Materialaufnahme-/-führungselemente (1) beinhaltet, die in ihren seitlichen Begrenzungsbereichen (5,6) zumindest teilweise mit schwenkbaren Wendeklappen (7,8) ausgerüstet bzw. die seitlichen Begrenzungsbereiche selber als schwenkbare Wendeklappen ausgebildet sind.

## Beschreibung

Die Erfindung betrifft eine Einrichtung zum Ein- und/oder Ausstapeln von Schüttgut mit mindestens einem an einem Fahrgestell heb- und senkbar gelagerten Ausleger, der eine Vielzahl von durch mindestens ein reversierbares Zugorgan antreibbaren Materialaufnahme-/-führungselemente beinhaltet.

Durch die DE-A 19 32 408 ist ein Gerät zum Beschicken und Rückladen von Schüttgut mit mindestens einem an einem Fahrgestell angeordneten lotrecht verschwenkbaren Kratzausleger und einer Bandstraße zum An- und Wegbringen des Gutes bekannt. Der nur in einer Richtung verlaufende Kratzausleger ist zum wahlweisen Ein- und Entspeichern ausgebildet, wobei das dem Kratzausleger zugeordnete Obertrum der Kratzerkette zum Einspeichern und das dem Kratzausleger zugeordnete Untertrum der Kratzerkette zum Entspeichern des Gutes vorgesehen ist. Infolge dieser Zuordnung muß im Obertrum ein verhältnismäßig hoher Bauaufwand zum Transport des Schüttgutes getätigt werden.

Die DE-C 12 92 077 betrifft ein kombiniertes Gerät zum Ein- und Ausspeichern von Schüttgut mit einem verschwenkbaren Ausspeicherausleger und einem an dem Ausleger darüber angeordneten, mit diesem verschwenkbaren Gurtband für das Abwerfen des Gutes auf die Halde. Das Gurtband ist an dem ein Kratzband aufweisenden Ausspeicherausleger schräg zu dem Verlauf des Kratzbandes so an dem Kratzausleger angeordnet, daß sich der senkrechte Abstand zwischen dem Gurtband und dem Kratzband zur Spitze des Kratzerauslegers hin verringert. Nachteilig ist hier festzustellen, daß infolge des zusätzlichen Bandes zum Einstapeln des Schüttgutes ein beträchtlicher Mehraufwand vonnöten ist, der eine nicht unerhebliche Kostenerhöhung mit sich bringt und darüber hinaus zu einer unerwünscht hohen Aufgabestelle oberhalb des Aufgabebereiches führt.

Ziel des Erfindungsgegenstandes ist es, ausgehend von der DE-A 19 32 408 die im gattungsbildenden Teil des ersten Patentanspruches beschriebene Einrichtung zum Ein- und Ausstapeln von Schüttgut dahingehend weiterzubilden, daß bei Reduzierung des Bauaufwandes unabhängig von der Förderrichtung die Materialaufnahme-/-führungselemente im Untertrum jederzeit mit Material optimal gefüllt werden können.

Dieses Ziel wird erfindungsgemäß dadurch erreicht, daß die Materialaufnahme-/-führungselemente in ihren seitlichen Begrenzungsbereichen zumindest teilweise mit schwenkbaren Wendeklappen ausgerüstet bzw. die seitlichen Begrenzungsbereiche selber als schwenkbare Wendeklappen ausgebildet sind.

In der DE-A 21 48 771 sind zwar bereits klappbare Schaufelteile beschrieben, die jedoch nicht an einem reversierbaren Entspeicherungskratzer angeordnet sind und nicht dessen Einsatzzweck im Sinne der Reversierbarkeit dienen. Auch die aus der DE-C 27 57 947 bekannten beweglichen Teile zur Füllgraderhöhung bei einem Brückenkratzer, die nicht an einem reversierbaren Kratzer und auch nicht an der Außenseite von Schaufeln angeordnet sind, geben für die erfindungsgemäße Aufgabenlösung nichts her. Ebenso vermittelt auch das bewegbare Schaufelteil an einem reversierbaren Schaufelteil in Form eines bewegbaren Schaufelbodens an einem Schaufelrad nach der DE-C 27 50 446 keine Anregung in Richtung auf die vorstehend beschriebene Gestaltung einer Schüttgutstapeleinrichtung.

Vorteilhafte Weiterbildungen des Erfindungsgegenstandes sind den Unteransprüchen zu entnehmen.

Da die Materialaufnahme-/-führungselemente zum Materialanschneiden und Führen des Schüttgutes in der Regel einen gebogenen Querschnitt aufweisen, wäre hier lediglich ein Materialtransport in einer Richtung möglich, da das Material bei umgekehrter Förderrichtung seitlich an den Materialaufnahme-/-führungselementen vorbei fließen würde.

In der einen Förderrichtung wird das Material entsprechend der gebogenen Form der Materialaufnahme-/-führungselemente aufgenommen und in die entsprechende Richtung bewegt, z.B. zum Einstapeln aufwärts. Die Wendeklappen bilden dann entweder die seitlichen Begrenzungsbereiche oder aber liegen an diesen an.

Bei umgekehrter Förderrichtung (Ausstapeln abwärts) werden entweder die seitlichen Begrenzungsbereiche in eine derartige Position geschwenkt, daß auch hier Materialführungs- und -aufnahmeflächen gebildet werden, die etwa eine Schaufelform darstellen, wobei die nun gebildeten Kanten das Schüttgut wieder anschneiden und in dem Innenbereich der Schaufeln fuhren können.

Die Betätigung der Wendeklappen erfolgt vorzugsweise mittels eines oder mehrerer an diesen befestigten Betätigungsorganen, wie Seilen, Ketten oder dgl., wobei die Wendeklappen in ihrer jeweiligen Endlage festlegbar und arretierbar sind.

Der Erfindungsgegenstand ist anhand eines Ausführungsbeispieles schematisch dargestellt und wird wie folgt beschrieben. Es Zeigen:
- Figur 1 -: Darstellung einiger Materialaufnahme-/-führungselemente mit daran befestigten Wendeklappen
- Figur 2 -: Vorderansicht einer dieser Wendeklappen samt Aufhängung

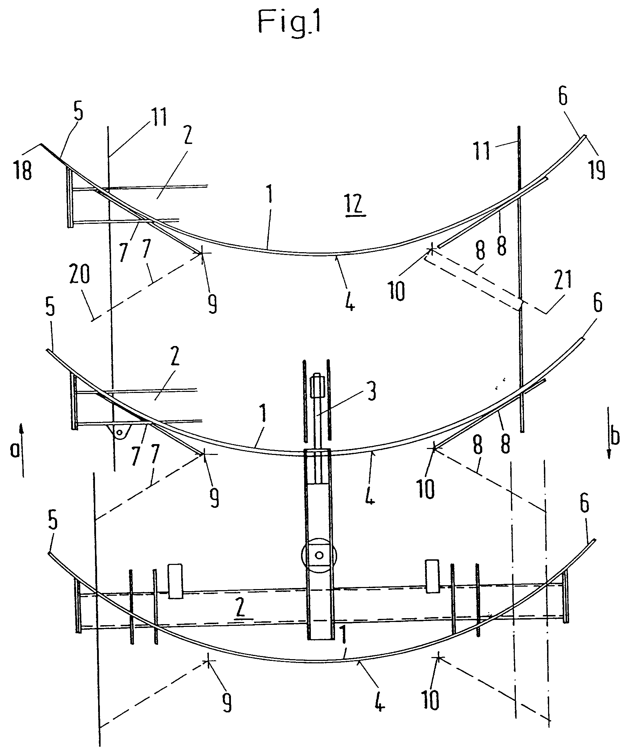

Figur 1 zeigt als Teilansicht eine nicht weiter dargestellte Einrichtung zum Ein- und/oder Ausstapeln von Schüttgut, einige der Materialaufnahme-/-führungselemente 1, die in an sich bekannter Weise im Querschnitt gekrümmt ausgebildet sind. Oberhalb der Materialaufnahme-/-führungselemente 1 ist jeweils eine Traverse 2 angeordnet, die über Lenkerelemente 3 untereinander verbunden sind. Im rückwärtigen Bereich 4 der Materialaufnahme-/-führungselemente 1 sind in den seitlichen Schnittkanten 18,19 für das Schüttgut aufweisenden Begrenzungsbereichen 5,6 gelenkig gelagerte Wendeklappen 7,8 angeordnet. Hier nicht dargestellt, jedoch ebenfalls möglich ist, die seitlichen Begrenzungsbereiche 5,6 selber als gelenkig vorgesehene Wendeklappen auszubilden. Figur 1 zeigt eine Draufsicht auf die Materialaufnahme-/-führungselemente 1, wobei die Wendeklappen 7,8 jeweils um eine bei horizontaler Stellung des Auslegers 12 vorgesehene Vertikalachse 9,10 schwenkbar sind. Die Wendeklappen 7 bzw. 8 sind gemeinsam über ein in diesem Beispiel als Seil ausgebildetes Organ 11 betätigbar, das an jeder Wendeklappe 7 bzw. 8 in deren äußerem Bereich befestigt ist. Bei der dargestellten gekrümmten Form der Materialaufnahme-/-führungselemente 1 wäre lediglich ein Materialtransport in Pfeilrichtung a möglich, da bei umgekehrter Transportrichtung das Material seitlich vom gekrümmten Bereich abfließen würde. Um dies zu vermeiden, werden beim Materialtransport in Pfeilrichtung b die Wendeklappen 7,8 aus ihrer am rückwärtigen Bereich 4 der Materialaufnahme-/-führungselemente 1 anliegenden Position in die gestrichelt dargestellte Position geschwenkt und in dieser Stellung verriegelt. Somit wird der rückwärtige Bereich 4 eines jeden Materialaufnahme-/-führungselementes 1 zu einem neuen Materialaufnahme-/-führungselement mit seitlichen Schneidbereichen 20,21, wobei nun ein problemloser Transport in Pfeilrichtung b möglich ist.

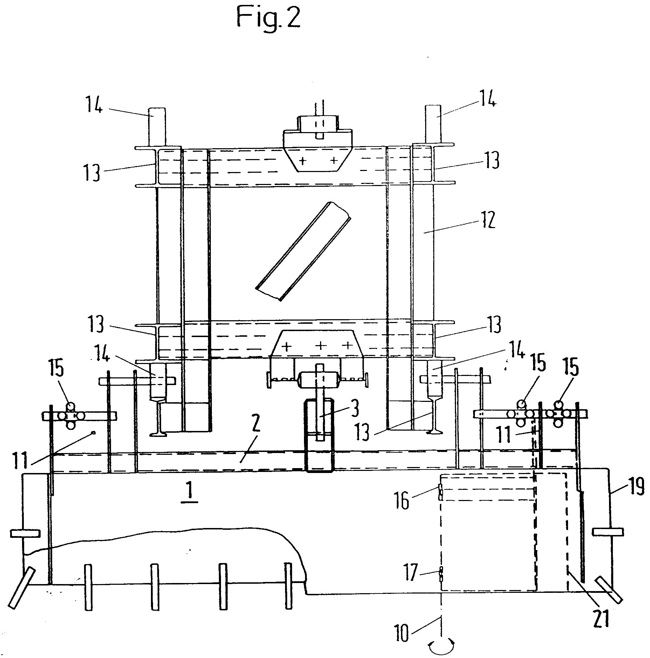

Figur 2 zeigt als Teilansicht den vorderen Bereich eines Materialaufnahme-/-führungselementes 1 in Verbindung mit dessen Verlagerung am Ausleger 12 der nicht weiter dargestellten Einrichtung zum Ein- und/oder Ausstapeln von Schüttgut. Erkennbar ist die oberhalb des Materialaufnahme-/-führungselementes 1 angeordnete Traverse 2 in Verbindung mit dem zugehörigen Lenkerelement 3. Der Ausleger 12 beinhaltet doppel-T-förmige Führungselemente 13, die zur Aufnahme von mit den Traversen 2 verbundenen Laufrollen 14 dienen. Die Materialaufnahme-/-führungselemente 1 werden mittels als Rundgliederketten ausgebildeten Zugorganen 15 angetrieben. Die Seile 11 für die dahinterliegenden Wendeklappen 8 sind lediglich angedeutet. Ferner angedeutet sind die Gelenkpunkte 16,17 der Wendeklappen 8 sowie die Schwenkachse 10. Die Schnittkanten 19 sowie die Schneidbereiche 21 sind ebenfalls angedeutet.

## Patentansprüche

1. Einrichtung zum Ein- und/oder Ausstapeln von Schüttgut mit mindestens einem an einem Fahrgestell heb- und senkbar gelagerten Ausleger (12), der eine Vielzahl von durch mindestens ein reversierbares Zugorgan (15) antreibbaren Materialaufnahme-/-führungselemente (1) beinhaltet, dadurch gekennzeichnet, daß die Materialaufnahme-/-führungselemente (1) in ihren seitlichen Begrenzungsbereichen (5,6) zumindest teilweise mit schwenkbaren Wendeklappen (7,8) ausgerüstet bzw. die seitlichen Begrenzungsbereiche (5,6) selber als schwenkbare Wendeklappen ausgebildet sind.

2. Einrichtung nach Anspruch 1, dadurch gekennzeichnet, daß die Wendeklappen (7,8) jeweils um eine im wesentlichen vertikale bzw. in Abhängigkeit von der Neigung des Auslegers (12) um eine geneigt zur Vertikalen verlaufende Achse (9,10) schwenkbar sind.

3. Einrichtung nach den Ansprüchen 1 und 2, dadurch gekennzeichnet, daß die Wendeklappen (7,8) in Abhängigkeit von der Förderrichtung (a,b) gemeinsam betätigbar sind.

4. Einrichtung nach den Ansprüchen 1 bis 3, dadurch gekennzeichnet, daß die Betätigung über an den Wendeklappen (7,8) bzw. eines jeden Begrenzungsbereiches (5,6) angreifende Seile (11), Ketten oder dgl. herbeiführbar ist.

5. Einrichtung nach den Ansprüchen 1 bis 4, dadurch gekennzeichnet, daß die Wendeklappen (7,8) in ihrer jeweiligen Endlage festlegbar und arretierbar sind.
